# DEMANDE DE BREVET EUROPEEN

(11) **EP 0 578 554 A1**
(43) Date de publication de la demande: **12.01.1994**
(21) Numéro de dépôt: 93401737.7
(22) Date de dépôt: 05.07.1993
(51) Int. Cl.: F16H 63/32

(54) **Fourchette de boîte de vitesses avec cran de crabot intégré et pourvu de clips de protection mécanique**

(30) Priorité: 07.07.1992 FR 9208378
(71) Demandeur: FAVI, F-80490 Hallencourt (FR)
(72) Inventeur: Rousseaux, Max, F-51100 Reims (FR)
(74) Mandataire: Casalonga, Axel

(57) **Abrégé**

Fourchette de boîte de vitesses avec cran de crabot intégré (7) dont les faces en regard (11) sont protégées par deux clips individuels (17a, 17b) indépendants en tôle mince d'acier à ressort.

## Description

L'invention concerne les fourchettes de boîtes de vitesses des véhicules.

On appelle fourchette de boîte de vitesses une pièce en forme de fourche comportant deux doigts de guidage qui viennent se loger dans des points généralement diamètralement opposés d'une gorge de révolution (cas d'une fourchette mâle) ou de chaque côté d'un collet (cas d'une fourchette femelle) porté par un pignon ou plus généralement par un manchon de crabotage coaxial à l'arbre primaire ou secondaire de la boîte.

La fourchette, dans son ensemble, est déplaçable en translation parallèlement à cet arbre en étant montée solidaire d'une tige coulissante, ou plus généralement en étant elle-même coulissante sur une tige fixe de la boîte. Pour commander ce mouvement de translation, qui préside au passage des vitesses, on utilise généralement un doigt de crabotage qui comporte une extrémité avec deux portées sphériques ou cylindriques qui s'inscrivent entre les deux faces parallèles en regard d'une encoche ou cran de crabot pratiqué dans une pièce qui peut être solidaire de la tige, mais qui est le plus souvent solidaire de la fourchette pour simplifier la construction.

Une telle fourchette doit satisfaire à la fois à trois exigences très différentes: en premier lieu, une bonne résistance mécanique, en particulier à la flexion pour résister au moment de flexion dû à l'écart transversal important entre les points d'action des doigts de guidage et les points d'action du doigt de crabotage; en second lieu, un faible coefficient de frottement et une bonne résistance à l'usure des doigts de guidage qui glissent en permanence à l'intérieur de la gorge du manchon de crabotage afin de transmettre à celui-ci les mouvements de translation, tout en permettant son mouvement de rotation; enfin, les deux faces en regard du cran de crabot doivent avoir une dureté suffisante pour résister à la pression importante occasionnée par le contact quasiment ponctuel de l'extrémité du doigt de crabotage.

Il est très difficile, dans la pratique, de satisfaire à la fois à ces trois exigences dans des conditions économiques.

Pendant longtemps, les fourchettes de boîtes de vitesses étaient réalisées en fonte, ce qui permet de bien résoudre les problèmes de résistance mécanique et de dureté, mais non les problèmes de coefficient de frottement et de résistance à l'usure. Pour cela, les faces de portées des doigts de guidage doivent être traitées, par exemple avec un dépôt de molybdène, ce qui est une opération onéreuse venant sensiblement doubler le prix de la pièce.

La tendance actuelle est de réaliser ces fourchettes de boîtes de vitesses en alliage cuivreux, notamment en laiton injecté sous pression, ce qui permet d'obtenir économiquement des pièces propres, légères et précises, et satisfait pleinement les conditions de résistance mécanique et de résistance à l'usure, le couple laiton/acier bénéficiant d'un très faible coefficient de frottement. Par contre, avec ce matériau, ce sont les problèmes de dureté qui sont les plus difficiles à résoudre. Pour cela, on est le plus souvent obligé de prévoir le cran de crabot dans une pièce en acier, elle-même fixée sur la fourchette, par exemple par un rivetage, ce qui non seulement augmente le coût de la pièce, mais pose des problèmes supplémentaires liés à la jonction de deux matériaux différents.

On connaît par la demande de brevet européen n° 0347301 une solution consistant à réaliser entièrement la fourchette en alliage cuivreux injecté, y compris la paroi comportant le cran de crabot qui fait corps avec elle, et à protéger les deux faces en regard du cran de crabot coopérant avec le doigt de crabotage à l'aide d'un clip en tôle d'acier à ressort (tôle bleue par exemple), d'une forme en U dont les deux ailes ont elles-mêmes une section en U avec des ailes tournées vers l'extérieur, et le premier U présente une forme légèrement ouverte, pour s'insérer dans le cran de crabot par déformation élastique, tandis que les deux U latéraux ont une forme légèrement fermée pour pincer par déformation élastique les deux parties de paroi.

Cependant, la protection du cran de crabot par le clip unique en U n'est pas entièrement satisfaisante pour une fourchette qui comporte un cran de crabot de faible hauteur. Dans ce cas en effet, le clip ne plaque pas parfaitement aux faces du cran de crabot et l'existence du jeu ainsi créé amène une fatigue en flexion qui peut aboutir à la rupture du clip notamment dans la zone des rayons au fond du cran de crabot.

Un autre inconvénient du clip unique en U apparaît en cas de faible hauteur du cran de crabot. L'épaisseur et la courbure de la tôle du clip au fond du cran de crabot diminue la hauteur disponible, déjà faible, du cran de crabot pour son actionnement par le doigt de crabotage qui n'aurait plus la place nécessaire pour répondre à sa fonction.

Le but de l'invention est d'éliminer les inconvénients de la protection du cran de crabot par un clip unique en réalisant une fourchette de boîte de vitesses avec cran de crabot intégré qui satisfasse à la fois toutes les exigences précédentes et comble la lacune de la demande de brevet précitée qui ne prévoit pas le cas de figure où ce sont les faces supérieures du crabot qui sont fonctionnelles.

La fourchette de boîte de vitesses, selon l'invention, comprend deux clips individuels indépendants associés aux deux branches du cran de crabot qui fait corps avec la fourchette. Chaque clip présente une forme en U dont le fond est plaqué contre l'une des faces en regard du cran de crabot et dont les ailes comportent des moyens d'accrochage sur les branches du cran de crabot. Les clips sont réalisés à partir d'une tôle mince d'acier à ressort.

Dans le cas de figure où les faces supérieures du crabot sont fonctionnelles, le clip comporte une languette qui constitue une troisième aile entre les ailes du U et qui est plaquée contre la face supérieure du cran de crabot.

L'invention apporte ainsi une solution simple et efficace pour résoudre les double problème de la rupture et de l'encombrement du clip unique classique dans un cran de crabot lorsque la hauteur de ce dernier est faible et dans le cas où ce sont les faces supérieures du crabot qui sont fonctionnelles au lieu des faces latérales.

D'autres particularités de l'invention apparaîtront dans la description qui va suivre de divers modes de réalisation pris comme exemples et représentés sur le dessin annexé, sur lequel :
la figure 1 est une vue en perspective éclatée de l'ensemble de la fourchette et du doigt de crabotage;
la figure 2 est une vue de détail en perspective d'un cran de crabot protégé par un seul clip en U de l'état de la technique;
la figure 3 est une vue en perspective d'un mode de réalisation de l'invention; et
la figure 4 est une vue en perspective d'un autre mode de réalisation de l'invention.

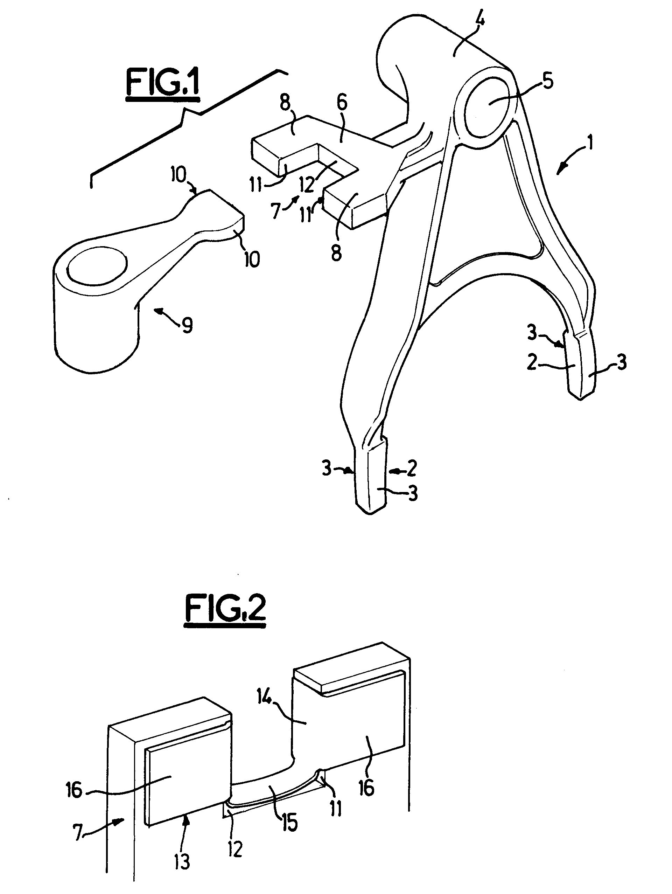

On voit sur la figure 1 la fourchette de boîte de vitesses 1 dans son ensemble avec les doigts de guidage 2, destinée à venir s'insérer dans la gorge du manchon de crabotage correspondant, non représenté, de manière que les deux portées planes 3 de chaque doigt de guidage 2 viennent porter contre les flancs de cette gorge afin d'assurer la transmission des mouvements de translation lors de l'engagement de l'une ou l'autre des deux vitesses commandées par ce manchon de crabotage.

On voit, d'autre part, le canon supérieur 4 dont l'alésage central 5 se monte sur la tige de guidage non représentée, pour coulisser sur cette tige ou avec elle selon le cas, de manière à guider avec précision le mouvement de translation parallèle à l'arbre de la boîte de vitesses portant le manchon de crabotage.

On voit également la paroi 6 portant le cran de crabot 7, avec les deux parties de paroi 8 subsistant de part et d'autre de ce cran 7.

On voit également sur la figure 1 le doigt de crabotage 9 dont l'extrémité comporte deux portées 10 sphériques ou cylindriques venant s'inscrire entre les deux faces parallèles en regard 11 de la forme en U du cran de crabot 7, de part et d'autre du fond 12. Ce doigt de crabotage 9 est représenté écarté du cran de crabot 7 pour plus de clarté, mais naturellement lors du fonctionnement, il se trouve engagé par son extrémité dans ce cran de crabot, ou à proximité immédiate selon le mouvement de sélection des fourchettes.

On voit en particulier sur la figure que, par rapport à la surface de guidage 5, le point d'action de la force produite par le doigt de crabotage 9 sur l'une ou l'autre des surfaces 11, est très éloigné dans le sens transversal à l'axe de translation des portées 3 transmettant cet effort au manchon de crabotage.

La fourchette 1 doit donc, avant tout, avoir une résistance mécanique suffisante pour résister à toutes les contraintes subies, en particulier au moment de flexion produit par l'écartement de ces forces fonctionnelles.

Par ailleurs, les portées 3 doivent glisser avec le minimum de frottement, et surtout le minimum d'usure à l'intérieur de la gorge du manchon de crabotage.

Enfin, les surfaces 11 du cran de crabot 7 doivent avoir une dureté suffisante pour résister au contact quasiment ponctuel des portées 10 du doigt de crabotage 9.

Pour satisfaire à ces trois exigences selon EP 0347301, on réalise l'ensemble de la fourchette 1, y compris les parois 6 et 8, en une seule pièce en alliage cuivreux injecté sous pression, ce qui permet de satisfaire déjà les deux premières conditions, puis on vient insérer dans le cran de crabot 7 un clip 13, illustré sur la figure 2, afin de satisfaire à la troisième condition.

Ce clip 13 est réalisé en tôle d'acier à ressort (tôle bleue par exemple), pour avoir une grande dureté et un faible coût. Il comporte naturellement des faces planes en regard 14, destinées à doubler les faces en regard 11 du cran de crabot 7 puisque c'est l'essentiel de sa fonction. Mais il comporte également une partie 15 destinée à réunir les deux parties 14 afin de ne constituer qu'une seule pièce, et également quatre ailes latérales 16 destinées à recouvrir au moins partiellement les deux faces de chacune des parties de paroi 8.

Le clip 13 ainsi fixé sur le cran de crabot 7 présente sa partie de liaison 15 légèrement courbée au fond de la section en U du cran de crabot. Dans le cas où la hauteur des faces en regard 11 du cran de crabot est faible, l'élasticité du clip fait que les faces planes 14 du clip ne puissent pas être plaquées totalement sur les faces 11 parallèles du cran de crabot. L'existence du jeu ainsi créé entre les faces 14 du clip et les faces 11 du cran de crabot amène une fatigue en flexion du clip provoquée par l'actionnement répété du cran de crabot 7 par le doigt de crabotage 9. Cela peut provoquer la rupture du clip 13 dans la zone des rayons au fond du cran de crabot, zone délimitée entre les faces 14 et la partie de liaison 15 du clip.

Un risque supplémentaire existe lorsque la hauteur du cran de crabot 7 est faible, la hauteur disponible d'actionnement des faces 14 du clip risque d'être insuffisante pour le doigt de crabotage 9 à cause de l'épaisseur et de la courbure de la partie de liaison 15 du clip 13. Cela constitue un facteur de risque de diminution de la fiabilité de l'actionnement de la fourchette 1, car les portées sphériques 10 du doigt de crabotage 9 risquent de ne pas pouvoir coopérer pleinement avec les faces planes 14 en regard du clip 13 et de ne pas remplir leur fonction de l'ouverture de la forme en U du cran de crabot 7.

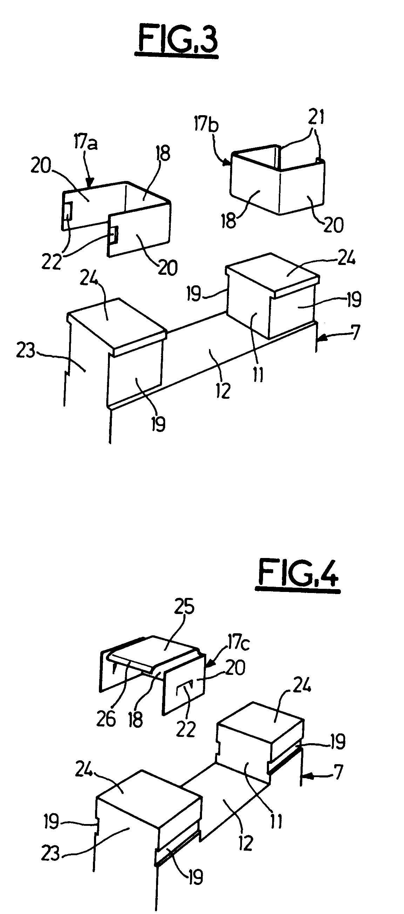

C'est pourquoi l'invention propose une solution simple et efficace pour supprimer entièrement le risque. Comme montré sur la figure 3, chaque branche du cran de crabot 7 en forme de U est pourvue d'un clip de protection individuel 17a, 17b. Chaque clip individuel 17a, 17b est sous forme de U dont le fond 18 est plaqué contre une des faces en regard parallèles 11 du cran de crabot 7. Chaque branche du cran de crabot présente sur les faces latérales des logements 19 pour loger les ailes 20 d'un clip 17a, 17b. Chaque clip est maintenu en place sur une branche du cran de crabot 7 par des accrochages mécaniques matérialisés par des retours 21 du clip 17b sur la face arrière 23 du cran de crabot 7 ou des poinçonnages 22 sur les faces latérales 20 du clip 17a, les poinçonnages 22 venant s'accrocher sur les faces arrière 23 du crabot 7.

Le remplacement du clip unique 13 en U classique par deux clips individuels indépendants 17a, 17b permet d'une part de supprimer les risques de rupture par fatigue de la liaison 15 du clip et d'autre part de dégager un espace suffisant pour recevoir les parties sphériques 10 du doigt de crabotage 9 dans le cran de crabot 7.

Dans certaines configurations, il s'avère nécessaire de protéger également les faces supérieures 24 des branches du cran de crabot 7, notamment lorsque l'on se trouve dans la configuration où ces faces supérieures 24 sont fonctionnelles. Cést le cas par exemple lorsque le doigt de crabotage 9 effectue un mouvement de rapprochement et d'éloignement par rapport au fond 12 du crabot pour l'actionnement de la fourchette 1. Pour ce faire, il suffit de prévoir une languette 25 sur le clip 17c en vue de couvrir au moins partiellement les faces supérieures 24 du cran de crabot 7. Pour assurer son maintien, la languette 25 présente un retour 26 à son extrémité libre qui s'accroche aux faces arrière 23 des branches du cran de crabot 7. Les ailes 20 du clip en U peuvent comporter des poinçonnages 22 qui coopèrent soit avec les faces arrière 23 du cran de crabot 7, soit avec des gorges latérales 19 du cran de crabot de largeur plus faible que la largeur des ailes 20 du clip. De préférence, on utilise les mêmes clips pour les deux branches d'un cran de crabot.

## Revendications

1. Fourchette de boîte de vitesses avec cran de crabot intégré (7), caractérisée en ce que le cran de crabot (7) est protégé par deux clips individuels (17a, 17b, 17c) de section en U dont le fond (18) est plaqué contre l'une des faces (11) en regard du cran de crabot et dont les ailes (20) comportent des moyens d'accrochage (21, 22) sur les faces latérales (19) ou arrière (23) du cran de crabot, les clips étant réalisés à partir d'une tôle mince d'acier à ressort,

2. Fourchette selon la revendication 1, caractérisée en ce que les moyens d'accrochage de chaque clip (17b) sont constitués par des retours (21) aux extrémités des ailes (20) du clip qui coopèrent sur une face arrière (23) du cran de crabot.

3. Fourchette selon la revendication 1, caractérisée en ce que les moyens d'accrochage sont constitués par des poinçonnages (22) sur les ailes (20) du clip (17a) et qui viennent d'accrocher sur les faces arrière (23) du cran de crabot.

4. Fourchette selon la revendication 1, caractérisée en ce que chaque clip (17c) présente une languette (25) pourvue d'un retour d'accrochage (26) destinée à être plaquée sur la surface supérieure (24) du cran de crabot (7), le retour d'accrochage (26) coopérant avec la face arrière (23) du cran de crabot.

5. Fourchette selon l'une des revendications 2 à 4, caractérisée en ce que chaque branche du cran de crabot (7) présente sur les faces latérales une gorge (19) servant de logement aux ailes (20) du clip (17a, 17b).

6. Fourchette selon la revendication 4, caractérisée en ce que les faces latérales du cran de crabot présente des gorges (19) dont la largeur est inférieure à la largeur des ailes (20) du clip, chaque aile (20) du clip présentant un poinçonnage (22) coopérant avec la gorge latérale (19) du cran de crabot.
